# EUROPEAN PATENT APPLICATION

(11) **EP 4 390 162 A1**
(43) Date of publication of application: **26.06.2024**
(21) Application number: 22858245.8
(22) Date of filing: 22.07.2022
(51) Int. Cl.: F16C 19/06, F16C 33/78, F16C 33/80, F16J 15/447, H01R 39/28

(54) **ROTARY CONNECTOR**

(30) Priority: 19.08.2021 JP 2021134093
(71) Applicant: Eagle Industry Co., Ltd., Minato-ku Tokyo 105-8587 (JP)
(72) Inventor: TAKATA, Hiroshi, Tokyo 105-8587 (JP); SAWADA, Hiroshi, Akishima-shi, Tokyo 196-0034 (JP)
(74) Representative: WSL Patentanwälte Partnerschaft mbB
(86) International application number: PCT/JP2022/028426
(87) International publication number: WO 2023/021923

(57) **Abstract**

Provided is a rotary connector capable of stably functioning over a long period of time.

The rotary connector includes: an outer peripheral electrode 30; an inner peripheral electrode 20 which is inserted through the outer peripheral electrode 30 and is disposed to be rotatable; a plurality of roller current collectors 40 which are arranged to make a planetary motion between the outer peripheral electrode 30 and the inner peripheral electrode 20; a bearing 33 that axially supports the inner peripheral electrode 20 to be rotatable; and a bearing holder 31 that holds the bearing 33, wherein bent portions 50 to 54 are provided at a passage 5 extending from a contact portion between the inner peripheral electrode 20 and the roller current collector 40 to the bearing 33.

## Description

### {TECHNICAL FIELD}

The present invention relates to a rotary connector, for example, a rotary connector used for electrically connecting a rotary element and a stationary element in a rotating mechanism.

### {BACKGROUND ART}

In various industrial fields, a rotary connector for electrically connecting a rotary element and a stationary element in a rotating mechanism can electrically connect an inner peripheral electrode and an outer peripheral electrode via a current collecting element disposed between the conductive inner peripheral electrode connected to the rotary element and the conductive outer peripheral electrode electrically connected to the stationary element.

In such a rotary connector, those filled with liquid metal such as mercury and gallium alloys and those in which a plurality of conductive roller current collectors are arranged are known as the current collecting element. In recent years, the rotary connector to which the roller current collector is applied has been gaining attention from the viewpoint of the environmental load caused by liquid leakage, the risk of electric leakage, and the like.

For example, in a rotary connector illustrated in Patent Citation 1, an inner peripheral electrode is inserted through a cylindrical outer peripheral electrode and cylindrical roller current collectors are evenly arranged between the outer peripheral electrode and the inner peripheral electrode. Further, a bearing holder holding a bearing is fixed to both axial ends of the outer peripheral electrode. The inner peripheral electrode is axially supported by these bearings to be rotatable. Accordingly, when a rotary element in a rotating mechanism rotates, the inner peripheral electrode rotates by following the rotation of the rotary element. Then, each roller current collector in contact with the outer peripheral surface of the inner peripheral electrode also rolls relatively to the inner peripheral electrode. At this time, since each roller current collector is also in contact with the inner peripheral surface of the outer peripheral electrode, the roller current collector rolls relative to the outer peripheral electrode. That is, each roller current collector can electrically connect the inner peripheral electrode and the outer peripheral electrode while making a planetary motion in which the roller current collector revolves around the inner peripheral electrode while rotating on its own axis.

### {CITATION LIST}

### {Patent Literature}

Patent Citation 1: JP 2011-222463 A (Page 6, FIG. 2)

### {SUMMARY OF INVENTION}

### {Technical Problem}

In the rotary connector of Patent Citation 1, since the roller current collector is elastically deformable and the outer diameter of the roller current collector is slightly larger than the radial dimension between the outer peripheral surface of the inner peripheral electrode and the inner peripheral surface of the outer peripheral electrode, the outer peripheral surface of the roller current collector is in surface contact with each of the outer peripheral surface of the inner peripheral electrode and the inner peripheral surface of the outer peripheral electrode, whereby the energization efficiency is improved.

Incidentally, since the circumferential dimension of the inner peripheral surface in the outer peripheral electrode located on the outer radial side is longer than the circumferential dimension of the outer peripheral surface in the inner peripheral electrode located on the inner radial side, the roller current collector easily slides on the outer peripheral electrode while following along the outer peripheral surface of the inner peripheral electrode.

As described above, since the roller current collector is elastically deformed and easily slides on the outer peripheral electrode in use, contaminants such as wear powder and peeling powder are likely to be generated at the contact points with the inner peripheral electrode, the outer peripheral electrode, and the roller current collector. Contaminants are particularly likely to be generated when the contact points are plated. Accordingly, in the roller current collector of Patent Citation 1 of which the axial direction is disposed along the up and down direction (vertical direction), contaminants are likely to enter the lower bearing and disturb the smooth rotation of the inner peripheral electrode. As a result, the life of the rotary connector may be shortened.

The present invention has been made in view of such problems and an object thereof is to provide a rotary connector capable of stably functioning over a long period of time.

### {Solution to Problem}

In order to solve the foregoing problems, a rotary connector according to the present invention is a rotary connector including: an outer peripheral electrode; an inner peripheral electrode which is inserted through the outer peripheral electrode and is disposed to be rotatable; a plurality of roller current collectors which are arranged to make a planetary motion between the outer peripheral electrode and the inner peripheral electrode; a bearing that axially supports the inner peripheral electrode to be rotatable; and a bearing holder that holds the bearing, wherein a bent portion is provided at a passage extending from a contact portion between the inner peripheral electrode and the roller current collector to the bearing. According to the aforesaid features of the present invention, contaminants are suppressed from entering the bearing from the roller current collector due to the trapping at the bent portion. Accordingly, the bearing is less likely to be caught by contaminants. Therefore, the rotary connector can stably function over a long period of time.

It may be preferable that the rotary connector is placed vertically and the bent portion is provided at a vertically lower side of the roller current collector. According to this preferable configuration, since contaminants descending due to gravity are trapped by the bent portion, it is possible to prevent contaminants from moving linearly toward the bearing.

It may be preferable that the bearing is a shielded bearing in which a shield element is provided at least vertically upward. According to this preferable configuration, the shielded bearing is less likely to be caught by contaminants slipping through the passage. Therefore, the rotary connector can stably function over a longer period of time.

It may be preferable that the bent portion is formed by a protrusion extending in a radial direction. According to this preferable configuration, since contaminants are trapped by the protrusion extending in the radial direction, it is possible to prevent contaminants from moving linearly toward the bearing.

It may be preferable that the protrusion includes an inner radial protrusion and an outer radial protrusion, and the inner radial protrusion and the outer radial protrusion overlap each other in a vertical direction. According to this preferable configuration, since the inner radial protrusion and the outer radial protrusion overlap each other in the vertical direction to form the plurality of bent portions so that the passage extends in a zigzag shape, contaminants are less likely to reach the bearing. Preferably, since a part of the zigzag passage has a length orthogonal to the extension direction equal to or shorter than half of the radial dimension of the bearing, contaminants are less likely to reach the bearing.

It may be preferable that the bent portion includes a recess which opens vertically upward. According to this preferable configuration, the recess provided in the bent portion is highly capable of holding trapped contaminants.

It may be preferable that the recess has an annular shape. According to this preferable configuration, the annular recess is highly efficient in trapping contaminants.

It may be preferable that the recess is formed in the bearing holder. According to this preferable configuration, since the bearing holder is a stationary component that does not rotate, no rotational force is applied to contaminants trapped in the recess. Therefore, the recess can reliably hold contaminants.

It may be preferable that the rotary connector further includes a protrusion portion which extends toward the recess. According to this preferable configuration, the protrusion portion not only prevents contaminants from moving linearly toward the bearing, but also tends to guide contaminants into the recess.

It may be preferable that the protrusion portion partially enters the recess. According to this preferable configuration, the protrusion portion can form a labyrinth structure together with the recess. Accordingly, the protrusion portion and the recess can more effectively prevent contaminants from moving toward the bearing.

### {BRIEF DESCRIPTION OF DRAWINGS}

FIG. 1 is a cross-sectional view of a rotary connector according to first embodiment of the present invention.
FIG. 2 is an axial cross-sectional view of the rotary connector according to the first embodiment.
FIG. 3 is a main enlarged view of the rotary connector according to the first embodiment.
FIG. 4 is a main enlarged view of a rotary connector according to a second embodiment of the present invention.
FIG. 5 is a main enlarged view of a rotary connector according to a third embodiment of the present invention.
FIG. 6 is a main enlarged view of a rotary connector according to a fourth embodiment of the present invention.
FIG. 7 is a main enlarged view of a rotary connector according to a fifth embodiment of the present invention.
FIG. 8 is a main enlarged view of a rotary connector according to a sixth embodiment of the present invention.

### {DESCRIPTION OF EMBODIMENTS}

Modes for carrying out a rotary connector according to the present invention will be described based on embodiments.

### {First embodiment}

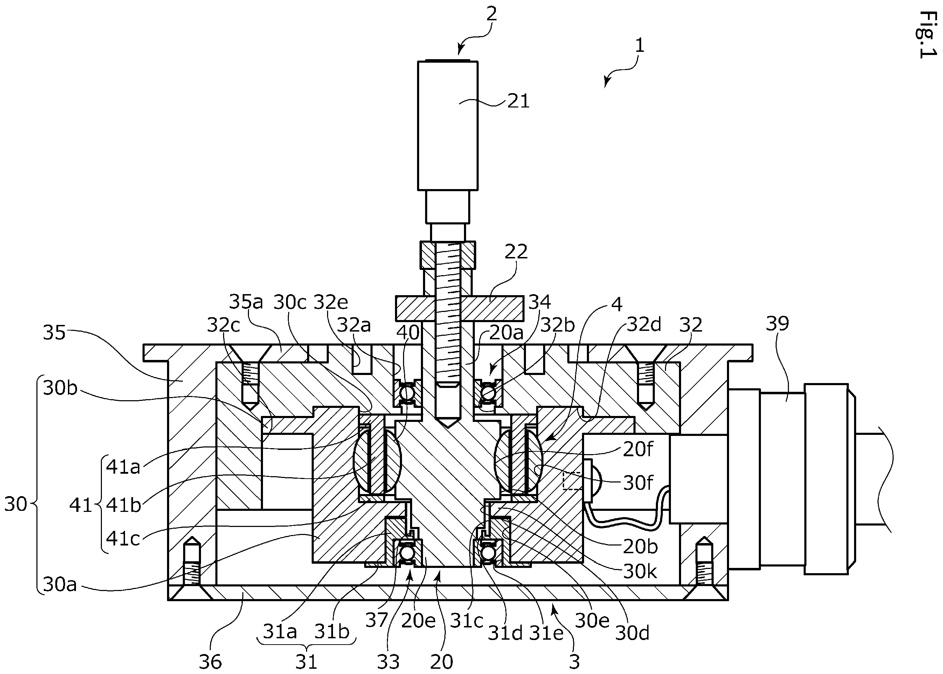

A rotary connector according to a first embodiment of the present invention will be described with reference to FIGS. 1 to 3. Hereinafter, the upper and lower sides when viewed from the front in FIG. 1 will be described as the upper and lower sides of the rotary connector. Specifically, the upper side of the paper where the socket is disposed is the upper side of the rotary connector, and the lower side of the paper where the cover is disposed is the lower side of the rotary connector.

A rotary connector 1 according to the first embodiment is placed vertically and is used at a rotating position of a semiconductor manufacturing machine which is a rotating mechanism. The rotary connector 1 conducts high-frequency electricity supplied from an external power source as a stationary element in the semiconductor manufacturing machine to a rotating shaft as a rotary element in the semiconductor manufacturing machine.

As illustrated in FIG. 1, the rotary connector 1 mainly includes a rotary element 2, a stationary element 3, and a current collecting element 4. The rotary element 2 which is connected to a rotating shaft in the semiconductor manufacturing machine is provided to be rotatable relative to the stationary element 3 by following the rotating shaft. As the rotary element 2 rotates, a roller current collector 40 in the current collecting element 4 makes a planetary motion around the rotary element 2 while electrically contacting the rotary element 2 and the stationary element 3. Further, the stationary element 3 includes a connector 39 connectable to an external power source.

First, the rotary element 2 will be described. The rotary element 2 includes an inner peripheral electrode 20, a socket 21, and a key 22.

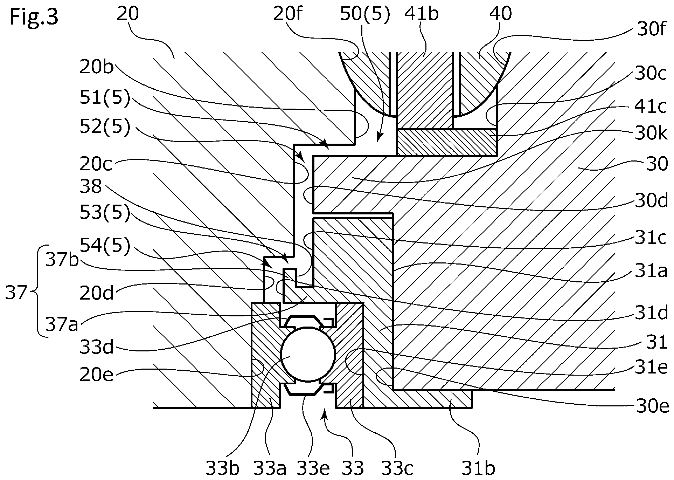

The inner peripheral electrode 20 is formed of metal or the like and has electrical conductivity. As illustrated in FIGS. 1 and 3, the inner peripheral electrode 20 includes an upper shaft 20a, a large-diameter cylinder 20b, an intermediate-diameter cylinder 20c (see FIG. 3), a small-diameter cylinder 20d (see FIG. 3), and a lower shaft 20e in order from the axially upper side. These are arranged so that their axes are aligned in the same straight line.

The socket 21 is fixed onto the upper shaft 20a by screwing. Further, the key 22 is externally fitted and fixed to the outer peripheral surface of the upper shaft 20a.

The large-diameter cylinder 20b is formed to have a diameter larger than that of the upper shaft 20a. Further, an annular groove 20f which decreases in diameter toward the axial center is formed on the outer peripheral surface of the large-diameter cylinder 20b. Further, the outer peripheral surface of the large-diameter cylinder 20b is plated with a highly conductive material such as silver.

Since the plating is thin and the drawing is complicated, the illustration is omitted. The same applies to plating described below.

The intermediate-diameter cylinder 20c (see FIG. 3) is formed to have a diameter smaller than that of the large-diameter cylinder 20b. The small-diameter cylinder 20d (see FIG. 3) is formed to have a diameter smaller than that of the intermediate-diameter cylinder 20c. The lower shaft 20e is formed to have substantially the same diameter as that of the upper shaft 20a. Specifically, the lower shaft is formed to have substantially the same diameter as that of the portion in which a bearing 34 is fitted.

The socket 21 is formed of a highly conductive material. The socket 21 is connected to the rotating shaft of the semiconductor manufacturing machine in a non-rotating state. In this state, the rotating shaft is also prevented from rotating by being key-coupled to the key 22.

Next, the stationary element 3 will be described. The stationary element 3 mainly includes an outer peripheral electrode 30, a lower bearing holder 31, an upper bearing holder 32, two bearings 33 and 34, a housing 35, and a cover 36. For convenience of description, the bearings 33 and 34 are the stationary element 3.

The outer peripheral electrode 30 is formed of a highly conductive material to have a flange attached cylindrical shape. The outer peripheral electrode 30 includes a tubular portion 30a, an outer flange portion 30b, and an inner flange portion 30k serving as a protrusion and an inner radial protrusion.

The tubular portion 30a is formed in a stepped cylindrical shape in which the lower side extends radially inward. A large-diameter hole portion 30c, a small-diameter hole portion 30d, and an intermediate-diameter hole portion 30e are formed on the inner radial side of the outer peripheral electrode 30 in order from the axially upper side.

An annular groove 30f which increases in diameter toward the axial center is formed at the axial center of the large-diameter hole portion 30c. The annular groove 30f is disposed to face the annular groove 20f of the inner peripheral electrode 20. Further, the inner peripheral surface of the large-diameter hole portion 30c is plated with highly conductive material such as silver.

The small-diameter hole portion 30d is an inner radial portion of the inner flange portion 30k, communicates with the large-diameter hole portion 30c, and has a diameter smaller than that of the large-diameter hole portion 30c. The intermediate-diameter hole portion 30e communicates with the small-diameter hole portion 30d and has a diameter smaller than that of the large-diameter hole portion 30c and larger than that of the small-diameter hole portion 30d.

The outer flange portion 30b is formed in an annular flat plate shape extending radially outward below the upper edge of the tubular portion 30a. The inner flange portion 30k is formed in an annular flat plate shape extending radially inward slightly below the tubular portion 30a in the axial direction.

The lower bearing holder 31 is formed of a resin molded product or the like, has high insulating properties, and is formed in a flange attached cylindrical shape. The lower bearing holder 31 includes a tubular portion 31a, an outer flange portion 31b, and an annular protrusion 37 serving as a protrusion and an inner radial protrusion in order from the axially upper side.

The tubular portion 31a is formed in a stepped cylindrical shape in which the upper side extends radially inward. An intermediate-diameter hole portion 31c, a small-diameter hole portion 31d, and a large-diameter hole portion 31e are formed on the inner radial side of the lower bearing holder 31 in order from the axially upper side.

The intermediate-diameter hole portion 31c is opened axially upward. The small-diameter hole portion 31d is an inner radial portion of the annular protrusion 37, communicates with the intermediate-diameter hole portion 31c, and has a diameter smaller than that of the intermediate-diameter hole portion 31c. The large-diameter hole portion 31e communicates with the small-diameter hole portion 31d, is opened downward, and has a diameter larger than that of the intermediate-diameter hole portion 31c.

The outer flange portion 31b is formed in an annular flat plate shape substantially orthogonal to the lower end of the tubular portion 31a and extending radially outward.

As illustrated in FIG. 3, the annular protrusion 37 includes a bottom portion 37a and an inner radial tubular portion 37b. The annular protrusion 37 is provided with an annular recess 38 serving as an annular recess opened axially upward, that is, the vertically upper side.

The bottom portion 37a is formed in an annular flat plate shape substantially orthogonal to the inner peripheral surface of the intermediate-diameter hole portion 31c and extending radially inward. The inner radial tubular portion 37b is formed in a cylindrical shape substantially orthogonal to the inner radial end of the bottom portion 37a and extending axially upward.

The bearing 33 is fitted into the large-diameter hole portion 31e. As will be described later, an outer race 33c of the bearing 33 comes into contact with the upper end surface of the large-diameter hole portion 31e.

The tubular portion 31a of the lower bearing holder 31 is fitted and fixed in the intermediate-diameter hole portion 30e of the outer peripheral electrode 30. Further, the outer flange portion 31b of the lower bearing holder 31 comes into contact with the lower edge of the outer peripheral electrode 30 to restrict the position. Accordingly, the outer race 33c of the bearing 33 is positioned.

The upper bearing holder 32 is formed of a resin molded product or the like, has high insulating properties, and is formed in a stepped cylindrical shape in which the upper side extends radially inward.

The bearing 34 is fitted in the intermediate-diameter hole portion 32a of the upper bearing holder 32. Additionally, since the bearings 33 and 34 have the same shape, these bearings will be described as the bearing 33 unless otherwise specified in the following description and the description of the bearing 34 will be omitted.

The outer peripheral electrode 30 is fitted in the large-diameter hole portion 32c in the upper bearing holder 32. Further, the upper end of the tubular portion 30a in the outer peripheral electrode 30 is fitted into the annular concave portion 32d in the upper bearing holder 32. With these, the outer peripheral electrode 30 is positioned radially and axially with respect to the upper bearing holder 32.

Further, the upper end portion of the upper bearing holder 32 is provided with an annular groove 32e which is opened axially upward and is recessed axially downward. The creepage distance of the upper bearing holder 32 is increased by the groove 32e.

As illustrated in FIG. 3, the bearing 33 is a shielded bearing which includes an inner race 33a, a plurality of balls 33b, the outer race 33c, and lip seals 33d and 33e serving as shield elements. That is, the bearing 33 is a shielded bearing in which the lip seals 33d and 33e are provided at the vertically upper side and the vertically lower side as the shield elements.

The lip seals 33d and 33e are formed in an annular shape, one end thereof is fixed to the inner race 33a, and the lip portion slides on the outer race 33c. Accordingly, contaminants are less likely to enter the rolling positions of the inner race 33a, the ball 33b, and the outer race 33c.

The lower shaft 20e in the inner peripheral electrode 20 is fitted in the bearing 33, more specifically, its inner race 33a. Further, the upper end of the inner race 33a comes into contact with the lower end surface in the small-diameter cylinder 20d.

The upper shaft 20a in the inner peripheral electrode 20 is inserted into the bearing 34.

The inner peripheral electrode 20 is axially supported to the stationary element 3 to be rotatable by these bearings 33 and 34.

Returning to FIG. 1, the housing 35 has insulating properties and is formed in a stepped cylindrical shape. Further, the cover 36 has insulating properties and is formed in a thin plate shape.

The upper bearing holder 32 is fitted in the housing 35. The outer peripheral electrode 30 and the upper bearing holder 32 are integrally assembled by screwing a bolt inserted into a communication hole of the housing 35 into a female thread at the upper end of the upper bearing holder 32.

Further, the cover 36 is fixed to the lower end of the tubular portion in the housing 35 with bolts.

The connector 39 is fixed to the side wall of the housing 35. The outer peripheral electrode 30 and the connector 39 are electrically connected by electric wires. Power can be supplied from an external power source (not illustrated) to the connector 39.

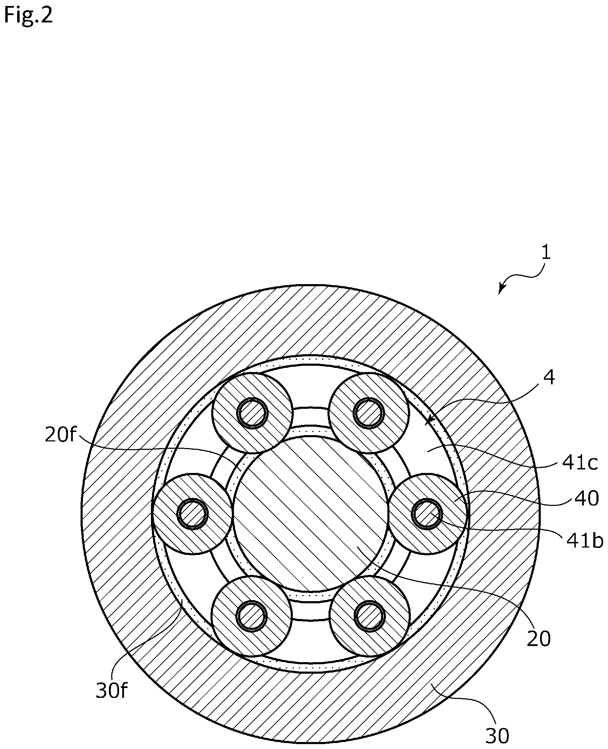

Next, the current collecting element 4 will be described. As illustrated in FIGS. 1 and 2, the current collecting element 4 includes six roller current collectors 40 (see FIG. 2) and a current collector holder 41. Additionally, in FIG. 2, the annular grooves 20f and 30f are hatched.

The roller current collector 40 is formed of metal or the like, has high conductivity, is elastically deformable, and is formed in a barrel-like tubular shape which increases in diameter from both axial ends toward the axial center. Further, the outer peripheral surface thereof is plated with a highly conductive material such as silver.

The current collector holder 41 includes an upper plate member 41a, six pins 41b, and a lower plate member 41c. The upper plate member 41a and the lower plate member 41c are formed in an annular thin plate shape.

The pin 41b has high conductivity and is elastically deformable. Six pins 41b are equally distributed (see FIG. 2), and their upper ends are fixed to the upper plate member 41a.

The current collecting element 4 is assembled such that six roller current collectors 40 are arranged on the annular groove 20f in the inner peripheral electrode 20, six pins 41b are inserted through the corresponding roller current collectors 40 from the axially upper side, and the lower end of the pin 41b is press-fitted into the communication hole of the corresponding lower plate member 41c.

Further, when the inner peripheral electrode 20 is inserted into the inner radial side of the outer peripheral electrode 30, the current collecting element 4 is press-fitted into the annular groove 30f of the outer peripheral electrode 30 while the current collector holder 41 and the pin 41b are elastically deformed. In addition, the assembling method can be changed as appropriate. For example, an introduction groove extending in the axial direction and aligned to each roller current collector 40 may be formed on the outer peripheral electrode 30 and the roller current collector 40 may be inserted along the introduction groove so that the roller current collector 40 is inserted into the annular groove 30f.

Further, in the gap between the annular groove 20f in the inner peripheral electrode 20 and the annular groove 30f in the outer peripheral electrode 30, the radial dimension at each position in the axial direction is slightly shorter than the radial dimension at the same position of the roller current collector 40.

Accordingly, the roller current collector 40 which is elastically deformed by being pressed between the annular groove 20f in the inner peripheral electrode 20 and the annular groove 30f in the outer peripheral electrode 30 is in surface contact with the annular groove 20f in the inner peripheral electrode 20 and the annular groove 30f in the outer peripheral electrode 30 without being in line contact therewith. As a result, the inner peripheral electrode 20, the roller current collector 40, and the outer peripheral electrode 30 are reliably brought into electrical contact in use.

As illustrated in FIG. 3, a passage 5 which communicates from the roller current collector 40 to the lower bearing 33 is formed between the rotary element 2 and the stationary element 3.

The passage 5 includes an upper axial portion 50, an upper radial portion 51, an intermediate axial portion 52, a lower radial portion 53, and a lower axial portion 54 in order from the roller current collector 40. Further, the passage 5 is provided with a plurality of bent portions in such a manner that the upper axial portion 50 and the upper radial portion 51, the upper radial portion 51 and the intermediate axial portion 52, the intermediate axial portion 52 and the lower radial portion 53, and the lower radial portion 53 and the lower axial portion 54 are substantially orthogonal to each other. That is, the passage 5 is formed in a zigzag shape by a plurality of bent portions.

Specifically, the upper axial portion 50 is mainly defined by the outer peripheral surface of the large-diameter cylinder 20b in the inner peripheral electrode 20 and the inner peripheral surface of the lower plate member 41c in the current collector holder 41 disposed substantially in parallel to the outer peripheral surface to be separated therefrom in the radial direction. Accordingly, the upper axial portion 50 is opened toward the roller current collector 40 located at the axially upper side and extends axially downward.

The upper radial portion 51 is defined by the lower end surface of the large-diameter cylinder 20b in the inner peripheral electrode 20 and the upper end surface of the inner flange portion 30k in the outer peripheral electrode 30 disposed substantially in parallel to the lower end surface to be separated therefrom in the axial direction. Accordingly, the upper radial portion 51 communicates with the lower end of the upper axial portion 50 and extends radially inward to be substantially orthogonal to the lower end.

That is, the bent portion of the passage 5 formed by the upper axial portion 50 and the upper radial portion 51 orthogonal to each other is formed by the inner flange portion 30k serving as a protrusion extending radially inward from the tubular portion 30a in the outer peripheral electrode 30.

The intermediate axial portion 52 is mainly defined by the outer peripheral surface of the intermediate-diameter cylinder 20c in the inner peripheral electrode 20, the inner peripheral surface of the small-diameter hole portion 30d in the outer peripheral electrode 30 disposed substantially in parallel to the outer peripheral surface to be separated therefrom in the radial direction, and the inner peripheral surface of the intermediate-diameter hole portion 31c in the lower bearing holder 31. The inner peripheral surface of the small-diameter hole portion 30d and the inner peripheral surface of the intermediate-diameter hole portion 31c are arranged in the same straight line. Accordingly, the intermediate axial portion 52 communicates with the inner radial end of the upper radial portion 51 and extends axially downward to be substantially orthogonal to the inner radial end.

Further, the intermediate axial portion 52 communicates with the annular recess 38 disposed in the extension direction thereof.

The lower radial portion 53 is defined by the lower end surface of the intermediate-diameter cylinder 20c in the inner peripheral electrode 20 and the upper end surface of the inner radial tubular portion 37b in the annular protrusion 37 disposed substantially in parallel to the lower end surface to be separated therefrom in the axial direction. Accordingly, the upper radial portion 51 communicates with the lower end of the intermediate axial portion 52 and extends radially inward to be substantially orthogonal to the lower end.

That is, the bent portion of the passage 5 formed by the intermediate axial portion 52 and the lower radial portion 53 orthogonal to each other is formed by the annular protrusion 37 serving as a protrusion extending radially inward from the tubular portion 31a in the lower bearing holder 31.

The lower axial portion 54 is mainly defined by the outer peripheral surface of the small-diameter cylinder 20d in the inner peripheral electrode 20 and the inner peripheral surface of the inner radial tubular portion 37b in the annular protrusion 37 disposed substantially in parallel to the outer peripheral surface to be separated therefrom in the radial direction. Accordingly, the lower axial portion 54 communicates with the inner radial end of the lower radial portion 53, extends axially downward to be substantially orthogonal to the inner radial end, and is opened toward the bearing 33 located at the axially lower side.

In the rotary connector 1 of this embodiment having the above-described configuration, the inner peripheral electrode 20 rotates relative to the outer peripheral electrode 30 by following the rotating shaft in the semiconductor manufacturing machine.

Further, in this rotation, each roller current collector 40 revolves around the inner peripheral electrode 20 together with the current collector holder 41 while rolling relative to the outer peripheral surface of the large-diameter cylinder 20b in the inner peripheral electrode 20.

At this time, each roller current collector 40 also rolls relative to the inner peripheral surface of the large-diameter hole portion 30c in the outer peripheral electrode 30.

Accordingly, each roller current collector 40 ensures a conductive area while the inner peripheral electrode 20 rotates relative to the outer peripheral electrode 30. Therefore, the rotary connector 1 can conduct the electricity supplied from the external power source to the rotating shaft in the semiconductor manufacturing machine.

Further, each roller current collector 40 has a barrel shape. Then, the annular grooves 20f and 30f are formed along the outer peripheral surface of the roller current collector 40. With these, even when the roller current collector 40 tries to move axially upward, the movement is restricted by the peripheral surfaces defining the annular grooves 20f and 30f.

Further, when the inner peripheral electrode 20 tries to tilt relative to the axis of the outer peripheral electrode 30, the roller current collector 40 easily follows the peripheral surfaces defining the annular grooves 20f and 30f.

Therefore, in the rotary connector 1, the contact area between the roller current collector 40 and the peripheral surfaces defining the annular grooves 20f and 30f is less likely to change. Accordingly, in the rotary connector 1, it is easy to keep the amount of electricity supplied from the external power source and conducted to the rotating shaft of the semiconductor manufacturing machine substantially constant.

Further, each roller current collector 40 is rotatably supported by the highly conductive pin 41b. Accordingly, since the allowable current value of the pin 41b is added to the allowable current value of the roller current collector 40, the maximum amount of electricity that can be conducted increases.

Further, the roller current collectors 40 held by the current collector holder 41 are restricted from being relatively close to each other in the circumferential direction. That is, the current collector holder 41 prevents damage due to contact between the roller current collectors 40.

Further, the bearing 33 is metallic and electrically conductive and the bearing holders 31 and 32 have insulating properties. Therefore, the bearing holders 31 and 32 can prevent the leakage of electricity conducted from the inner peripheral electrode 20 to the bearing 33.

Further, the rotary connector 1 is cased by the housing 35 and the cover 36 having high insulating properties. Therefore, the rotary connector 1 is prevented from unintentional leakage, electric shock due to contact, and the like.

When each roller current collector 40 makes a planetary motion, contaminants such as wear powder and plating peeling powder are generated due to friction, deterioration over time, etc. Contaminants may descend due to gravity and enter the passage 5.

As described above, the passage 5 is formed in a zigzag shape by a plurality of bent portions in such a manner that the upper axial portion 50 and the upper radial portion 51, the upper radial portion 51 and the intermediate axial portion 52, the intermediate axial portion 52 and the lower radial portion 53, and the lower radial portion 53 and the lower axial portion 54 are substantially orthogonal to each other.

More specifically, the bent portion formed by the upper axial portion 50 and the upper radial portion 51 substantially orthogonal to each other is provided at the vertically lower side of the roller current collector 40 and prevents contaminants from descending due to gravity and moving vertically downward in a straight line. Further, the bent portion formed by the intermediate axial portion 52 and the lower radial portion 53 substantially orthogonal to each other is also provided at the vertically lower side of the roller current collector 40 and prevents contaminants from descending due to gravity and moving vertically downward in a straight line. Here, in the specification, the vertically lower side of the roller current collector 40 is not limited to just below as long as it is below. Accordingly, contaminants are less likely to reach the bearing 33 compared to a configuration in which the passage is formed in a straight-line shape. In this way, since the passage 5 is formed in a zigzag shape by the plurality of bent portions, the movement of contaminants is suppressed.

Further, since the passage 5 is narrow, contaminants are less likely to move toward the bearing 33. From the viewpoint of preventing movement, the extent of the narrowness may be set such that the length orthogonal to the extension direction of the passage 5 (that is, the direction in which contaminants move toward the bearing 33) is equal to or shorter than half of the radial dimension of the bearing and preferably equal to or shorter than the diameter of the ball 33b. Further, in this embodiment, all of the upper axial portion 50, the upper radial portion 51, the intermediate axial portion 52, the lower radial portion 53, and the lower axial portion 54 constituting the passage 5 are narrow, but a part of them may be narrow.

Further, contaminants descending while being guided to the upper axial portion 50 fall onto the inner flange portion 30k in the outer peripheral electrode 30. That is, since contaminants are dropped and trapped on the upper end surface of the inner flange portion 30k extending radially inward at the bent portion formed by the upper axial portion 50 and the upper radial portion 51 substantially orthogonal to each other, it is possible to restrict the movement of contaminants in the passage 5.

Further, contaminants passing through the upper radial portion 51 and descending while being guided to the intermediate axial portion 52 fall onto the annular recess 38 formed in the annular protrusion 37 in the lower bearing holder 31. That is, since contaminants are dropped and trapped on the annular recess 38 formed at the annular protrusion 37 extending radially inward at the bent portion formed by the intermediate axial portion 52 and the lower radial portion 53 substantially orthogonal to each other, it is possible to restrict the movement of contaminants in the passage 5. Further, since the annular protrusion 37 is disposed above the bearing 33 like an eave, contaminants are prevented from moving linearly toward the bearing 33. Additionally, the annular protrusion 37 may not be provided with the annular recess 38. In this case, contaminants are dropped and trapped on the flat upper end surface of the annular protrusion 37 extending radially inward at the bent portion.

As described above, contaminants are prevented from entering the bearing 33 from the roller current collector 40 by being trapped by the bent portions formed in the passage 5. Accordingly, the bearing 33 is less likely to be caught by contaminants. Therefore, the rotary connector 1 can stably function over a long period of time.

Further, since the rotary connector 1 of this embodiment is placed vertically and the bent portion is provided at the vertically lower side of the roller current collector 40, contaminants descending due to gravity are trapped by the bent portion and hence are prevented from moving linearly toward the bearing.

Further, since the bent portion formed in the passage 5 is formed by the inner flange portion 30k and the annular protrusion 37 extending radially inward, contaminants can be prevented from moving linearly toward the bearing 33. Further, since the passage 5 extends in a zigzag shape as the passage 5 is formed by a plurality of bent portions, contaminants are less likely to reach the bearing 33.

Further, the annular recess 38 formed in the annular protrusion 37 is formed in a groove shape opening axially upward at the bent portion formed in the passage 5. Therefore, the annular recess 38 is highly capable of holding trapped contaminants.

Further, the annular recess 38 which is formed in an annular shape can trap contaminants falling at any position in the circumferential direction. Therefore, the annular recess 38 is highly efficient in trapping contaminants.

Further, the rotational force of the inner peripheral electrode 20 is not applied to the annular recess 38 formed in the lower bearing holder 31 which is a stationary member. Accordingly, the rotational force of the inner peripheral electrode 20 is not applied to contaminants trapped by the annular recess 38. Therefore, the annular recess 38 can reliably hold contaminants.

Further, the bearing 33 which is a shielded bearing is less likely to be caught by contaminants slipping through the passage 5. Therefore, the rotary connector 1 can stably function over a longer period of time.

In addition, in the inner peripheral electrode 20, the large-diameter cylinder 20b and the small-diameter cylinder 20d are continuous. In other words, even when the intermediate-diameter cylinder 20c is formed to have the same diameter as that of the small-diameter cylinder 20d, it is possible to prevent contaminants from descending due to gravity and moving vertically downward in a straight line since the bent portion is formed in the passage 5 by the annular protrusion 37.

### {Second embodiment}

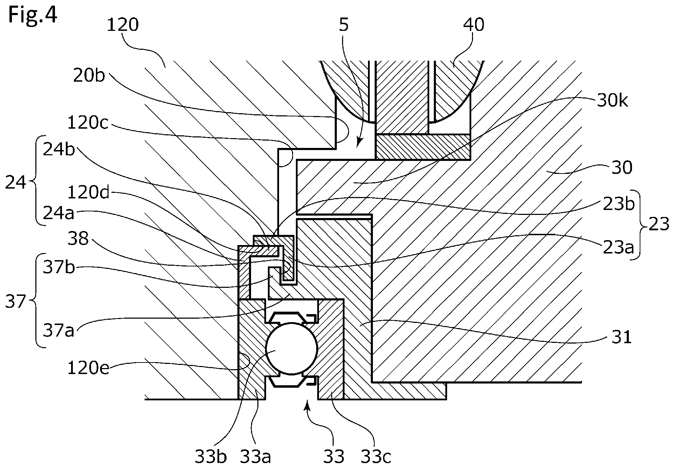

Next, a rotary connector according to a second embodiment of the present invention will be described with reference to FIG. 4. Additionally, the same reference numerals are given to the same components as those illustrated in the first embodiment, and redundant descriptions are omitted.

As illustrated in FIG. 4, a protrusion member 23 extending downward at the outer radial side and a pushing member 24 extending downward at the inner radial side are fixed to an inner peripheral electrode 120.

The protrusion member 23 is formed in a flange attached cylindrical shape and includes a tubular portion 23a serving as a protrusion portion extending toward the annular recess 38 and an inner flange portion 23b serving as a protrusion and an outer radial protrusion. The tubular portion 23a is formed in a cylindrical shape extending in the axial direction. The inner flange portion 23b is formed in an annular flat plate shape substantially orthogonal to the upper end of the tubular portion 23a and extending radially inward.

The protrusion member 23 is externally fitted on an outer peripheral surface of a small-diameter cylinder 120d in the inner peripheral electrode 120. Further, in the protrusion member 23, the upper end surface of the inner flange portion 23b comes into contact with a lower end surface of an intermediate-diameter cylinder 120c in the inner peripheral electrode 120. Further, the lower end surface of the inner flange portion 23b is disposed substantially on the same plane as the lower end surface of the small-diameter cylinder 120d. That is, the inner flange portion 23b in the protrusion member 23 extends radially outward from the small-diameter cylinder 120d in the inner peripheral electrode 120 and the outer radial end portion of the inner flange portion 23b protrudes radially outward from the outer peripheral surface of the intermediate-diameter cylinder 120c. That is, the outer radial end portion of the inner flange portion 23b constitutes the protrusion extending radially outward from the inner peripheral electrode 120.

The pushing member 24 is formed in a flange attached cylindrical shape and includes a tubular portion 24a and an outer flange portion 24b. The tubular portion 24a is formed in a cylindrical shape extending in the axial direction. The outer flange portion 24b is formed in an annular flat plate shape substantially orthogonal to the upper end of the tubular portion 24a and extending radially outward.

The pushing member 24 is externally fitted on the outer peripheral surface of the lower shaft 120e in the inner peripheral electrode 120. Further, the upper end surface of the outer flange portion 24b of the pushing member 24 is in contact with the lower end surface of the small-diameter cylinder 120d in the inner peripheral electrode 120 and the lower end surface of the inner flange portion 23b in the protrusion member 23.

Further, the lower edge of the tubular portion 24a of the pushing member 24 comes into contact with the inner race 33a of the bearing 33 to restrict the position of the bearing 33.

Here, the protrusion member 23 is inserted into the annular recess 38 at the lower end portion of the tubular portion 23a, more specifically, from the axial center to the lower edge of the tubular portion 23a.

Accordingly, the protrusion member 23 is disposed at the axially upper side of the annular recess 38 like an eave. Therefore, the protrusion member 23 not only prevents contaminants from moving linearly toward the bearing 33 but also tends to guide contaminants to the annular recess 38.

More specifically, the inner peripheral surface of the tubular portion 23a is disposed substantially in parallel to the inner peripheral surface of the inner radial tubular portion 37b in the annular protrusion 37 to be separated therefrom in the radial direction. The lower end surface of the tubular portion 23a is disposed to be separated from the upper end surface of the bottom portion 37a in the annular protrusion 37. The outer peripheral surface of the tubular portion 23a is disposed substantially in parallel to the inner peripheral surface of the intermediate-diameter hole portion 31c in the lower bearing holder 31 to be separated therefrom in the radial direction. That is, a labyrinth structure is formed by the tubular portion 23a in the protrusion member 23 and the annular recess 38 formed in the annular protrusion 37.

Accordingly, since contaminants are dropped and trapped on the annular recess 38 formed on the annular protrusion 37 extending radially inward and the inner flange portion 23b of the protrusion member 23 extending radially outward at the bent portion formed in the passage 5, it is possible to restrict the movement of contaminants in the passage 5. Further, since the inner flange portion 23b extending radially outward and the annular protrusion 37 extending radially inward overlap each other in the vertical direction to form the plurality of bent portions so that the passage 5 extends in a zigzag shape, contaminants are less likely to reach the bearing.

Further, since a labyrinth structure is formed in such a manner that the lower end portion of the tubular portion 23a extending downward from the inner flange portion 23b enters the annular recess 38 formed in the annular protrusion 37, it is possible to more effectively prevent contaminants from moving toward the bearing 33.

### {Third embodiment}

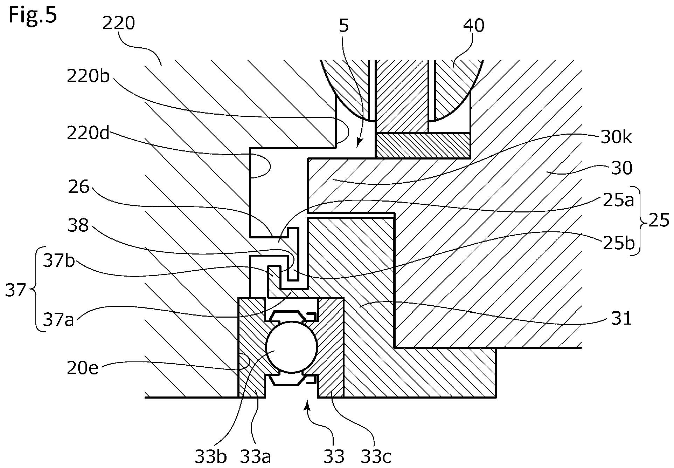

Next, a rotary connector according to a third embodiment of the present invention will be described with reference to FIG. 5. Additionally, the same reference numerals are given to the same components as those illustrated in the first and second embodiments, and redundant descriptions are omitted.

As illustrated in FIG. 5, in an inner peripheral electrode 220, a large-diameter cylinder 220b and a small-diameter cylinder 220d are continuous. Further, the small-diameter cylinder 220d is provided with an annular protrusion 25 having a lateral T-shaped cross-section and protruding radially outward from the outer peripheral surface thereof.

The annular protrusion 25 includes an annular plate portion 25a serving as a protrusion and an outer radial protrusion and a tubular portion 25b serving as a protrusion portion extending toward the annular recess 38. The annular plate portion 25a extends radially outward to be substantially orthogonal to the outer peripheral surface of the small-diameter cylinder 220d. The tubular portion 25b extends axially upward and downward to be substantially orthogonal to the outer radial end of the annular plate portion 25a.

The annular protrusion 25 is disposed at the axially upper side of the annular recess 38 like an eave. The tubular portion 25b forms a labyrinth structure together with the annular recess 38 formed in the annular protrusion 37.

Accordingly, in this embodiment, since the annular plate portion 25a of the annular protrusion 25 and the annular protrusion 37 form a plurality of bent portions in the passage 5 so that the passage 5 extends in a zigzag shape, contaminants are less likely to reach the bearing 33.

Further, since a labyrinth structure is formed in such a manner that the lower end portion of the tubular portion 25b extending downward from the annular plate portion 25a enters the annular recess 38 formed in the annular protrusion 37, it is possible to more effectively prevent contaminants from moving toward the bearing 33.

Further, an annular recess 26 serving as an annular recess opening axially upward is formed above the annular protrusion 25 by the upper end portion of the tubular portion 25b and the outer peripheral surface of the small-diameter cylinder 220d. In this way, contaminants can be trapped not only by the annular recess 38 in the stationary element 3 but also the annular recess 26 in the rotary element 2.

Further, the radial length of the annular recess 26 is longer than that of the passage 5 between the annular protrusion 25 and the outer peripheral electrode 30 and contaminants are likely to flow into the annular recess 26.

### {Fourth embodiment}

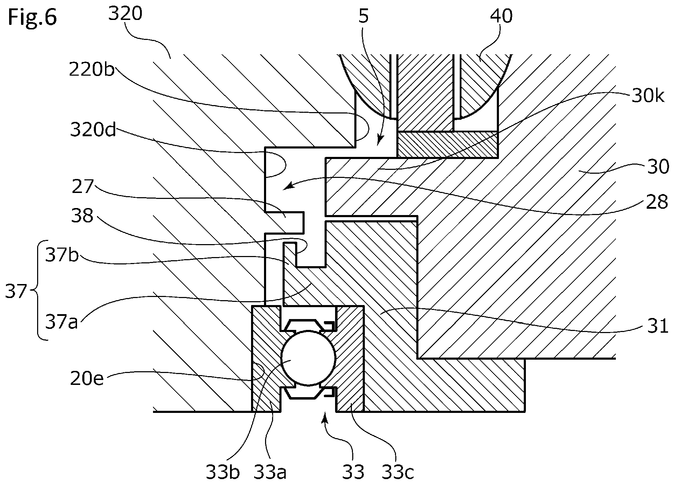

Next, a rotary connector according to a fourth embodiment of the present invention will be described with reference to FIG. 6. Additionally, the same reference numerals are given to the same components as those illustrated in the first to third embodiments, and redundant descriptions are omitted.

As illustrated in FIG. 6, a small-diameter cylinder 320d of an inner peripheral electrode 320 is provided with an annular protrusion 27 serving as a protrusion and an outer radial protrusion protruding radially outward to be substantially orthogonal to the outer peripheral surface thereof. The annular protrusion 27 is disposed at the axially upper side of the annular recess 38 formed on the annular protrusion 37 like an eave.

Accordingly, in this embodiment, since a plurality of bent portions are formed in the passage 5 by the annular protrusion 27 and the annular protrusion 37 so that the passage 5 extends in a zigzag shape, contaminants are less likely to reach the bearing 33.

Further, the annular protrusion 27 defines a radial annular concave portion 28 together with the lower end surface of the large-diameter cylinder 220b and the outer peripheral surface of the small-diameter cylinder 320d. In this way, contaminants can be trapped not only by the annular recess 38 in the stationary element 3 but also the radial annular concave portion 28 in the rotary element 2, specifically, the upper end surface of the annular protrusion 27. Further, the radial length of the radial annular concave portion 28 is longer than the passage 5 between the annular protrusion 27 and the outer peripheral electrode 30 and contaminants are likely to be trapped by the upper end surface of the annular protrusion 27.

### {Fifth embodiment}

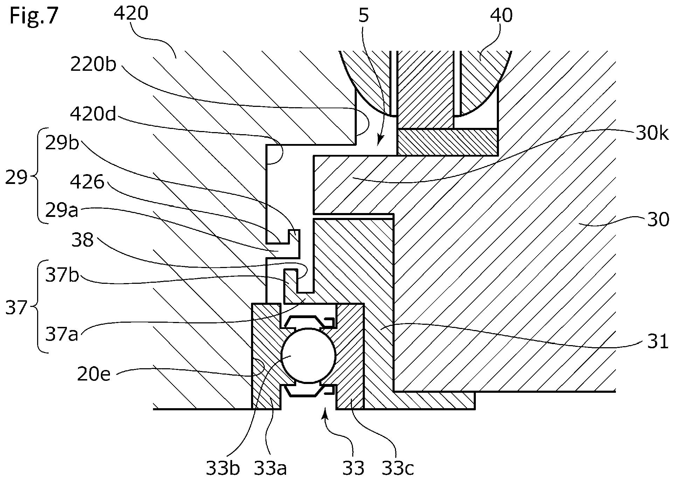

Next, a rotary connector according to a fifth embodiment of the present invention will be described with reference to FIG. 7. Additionally, the same reference numerals are given to the same components as those illustrated in the first to fourth embodiments, and redundant descriptions are omitted.

As illustrated in FIG. 7, a small-diameter cylinder 420d in an inner peripheral electrode 420 is provided with a lateral L-shaped annular protrusion 29 serving as a protrusion and an outer radial protrusion protruding from the outer peripheral surface in the radial direction.

The annular protrusion 29 includes an annular plate portion 29a and a tubular portion 29b. The annular plate portion 29a extends radially outward to be substantially orthogonal to the outer peripheral surface of the small-diameter cylinder 420d. The tubular portion 29b extends axially upward to be substantially orthogonal to the outer radial end of the annular plate portion 29a.

Accordingly, the annular protrusion 29 is disposed at the axially upper side of the annular recess 38 like an eave. Further, the annular protrusion 29 forms an annular recess 426 together with the outer peripheral surface of the small-diameter cylinder 420d.

The protrusion described in the second to fifth embodiments may be separated from the inner peripheral electrode or may be integrated with the inner peripheral electrode.

### {Sixth embodiment}

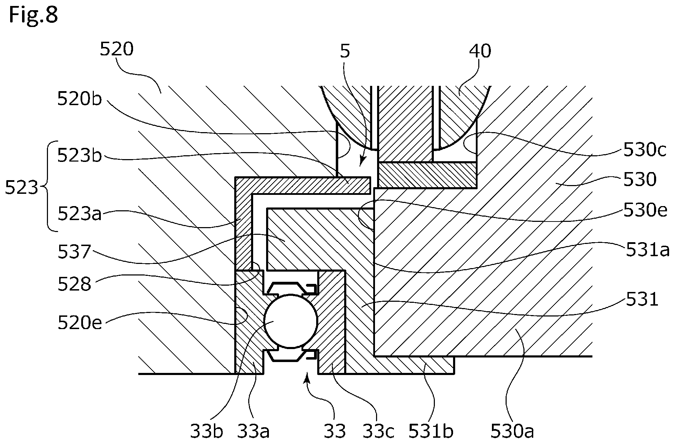

Next, a rotary connector according to a sixth embodiment of the present invention will be described with reference to FIG. 8. Additionally, the same reference numerals are given to the same components as those illustrated in the first to fifth embodiments, and redundant descriptions are omitted.

As illustrated in FIG. 8, an outer peripheral electrode 530 is different from those of the first to fifth embodiments in that the inner flange portion 30k is not provided. That is, a large-diameter hole portion 530c and an intermediate-diameter hole portion 530e are continuous on the inner radial side of the outer peripheral electrode 530. Further, the axial dimension on the lower side of the large-diameter hole portion 530c in the outer peripheral electrode 530 is shorter than those of the first to fifth embodiments.

A lower bearing holder 531 is formed in a flange attached cylindrical shape. The lower bearing holder 531 includes a tubular portion 531a, an outer flange portion 531b, and an annular protrusion 537 serving as a protrusion and an inner radial protrusion.

In an inner peripheral electrode 520, a large-diameter cylinder 520b and a lower shaft 520e are continuous and the axial dimension on the lower side of the large-diameter cylinder 520b is shorter than those of the first to fifth embodiments. Further, a protrusion member 523 is fixed to the inner peripheral electrode 520.

The protrusion member 523 is formed in a flange attached cylindrical shape and includes a tubular portion 523a and an outer flange portion 523b serving as a protrusion and an outer radial protrusion. The tubular portion 523a is formed in a cylindrical shape extending in the axial direction. The outer flange portion 523b is formed in an annular flat plate shape substantially orthogonal to the upper end of the tubular portion 523a and extending radially outward.

In a state in which the protrusion member 523 is externally fitted on the outer peripheral surface of the lower shaft 520e in the inner peripheral electrode 520, the outer radial end portion of the outer flange portion 523b protrudes radially outward from the outer peripheral surface of the large-diameter cylinder 520b. That is, the outer radial end portion of the outer flange portion 523b forms a protrusion extending radially outward from the inner peripheral electrode 520.

More specifically, the outer flange portion 523b extends substantially in parallel to the upper end surface of the annular protrusion 537 serving as a protrusion and an inner radial protrusion in the lower bearing holder 531 to be separated therefrom in the axial direction. Further, the outer radial edge of the outer flange portion 523b is disposed to be separated from the inner peripheral surface of the intermediate-diameter hole portion 530e in the outer peripheral electrode 530 in the radial direction.

Further, the protrusion member 523 defines a radial annular concave portion 528 together with the upper end surface of the bearing 33. The annular protrusion 537 of the lower bearing holder 531 is disposed to be inserted into the radial annular concave portion 528 and the inner radial edge of the annular protrusion 537 is disposed to be separated from the outer peripheral surface of the tubular portion 523a in the protrusion member 523 in the radial direction. That is, the protrusion member 523 and the annular protrusion 537 of the lower bearing holder 531 form a labyrinth structure.

Accordingly, in this embodiment, since a plurality of bent portions are formed in the passage 5 by the annular protrusion 537 and the outer flange portion 523b in the protrusion member 523 so that the passage 5 extends in a zigzag shape, contaminants are less likely to reach the bearing 33.

Further, since the annular protrusion 537 is disposed above the bearing 33 like an eave, contaminants are prevented from moving linearly toward the bearing 33.

Further, since a plurality of bent portions can be formed with a simple structure by the outer flange portion 523b in the protrusion member 523 extending radially outward from the inner peripheral electrode 520 and the annular protrusion 537 extending radially inward from the lower bearing holder 531, the bent portion can be formed even when the passage 5 communicating from the roller current collector 40 to the lower bearing 33 is small in the axial direction.

Further, since the protrusion member 523 is separated from the inner peripheral electrode 520, the protrusion member 523 can be formed of a material different from that of the inner peripheral electrode. For example, contaminants can be easily trapped by the outer radial end portion of the outer flange portion 523b and the movement of contaminants toward the bearing 33 can be prevented more effectively by selecting a material that easily attracts contaminants.

In addition, the protrusion described in this embodiment is not limited to the protrusion member separated from the inner peripheral electrode and may be integrally formed with the inner peripheral electrode to facilitate manufacturing.

Further, contaminants may be trapped by an annular recess by forming the annular recess opening axially upward on the upper end surface of the outer flange portion 523b or the upper end surface of the lower bearing holder 531.

Although the first to sixth embodiments of the present invention have been described with reference to the drawings, the specific configurations are not limited to those of the first to sixth embodiments, and any modifications and additions that do not depart from the scope of the present invention are included in the present invention.

For example, in the above-described first to sixth embodiments, although it has been described such that the inner peripheral electrode and the outer peripheral electrode are cased by the housing and the cover, the present invention is not limited thereto and the inner peripheral electrode and the outer peripheral electrode may be exposed.

Further, in the above-described first to sixth embodiments, although it has been described such that the roller current collector has a barrel shape, the present invention is not limited thereto. For example, the roller current collector may have a cylindrical shape or a shape in which the diameter is reduced from both axial ends toward the axial center and the shape may be changed as appropriate. Accordingly, the shape of the annular groove in which the roller current collector is disposed may be changed as appropriate. Further, the annular groove may not have a shape along the roller current collector.

Further, in the above-described first to sixth embodiments, although it has been described such that the pin of the holder is formed of a highly conductive material, the present invention is not limited thereto and the pin may be formed of a highly insulating material.

Further, in the above-described first to sixth embodiments, although it has been described such that the pin of the holder is elastically deformable, the present invention is not limited thereto and the pin may be a rigid body. With such a configuration, the contact area between the pin and the roller current collector can be reduced by thinning the pin.

Further, in the above-described first to sixth embodiments, although it has been described such that the recess is formed in an annular shape, the present invention is not limited thereto and one or more recesses which are not continuous in an annular shape may be formed.

Further, in the above-described first to sixth embodiments, although it has been described such that only one annular concave portion is formed in the stationary element, the present invention is not limited thereto and a plurality of recesses may be formed at intervals in the radial direction. The same applies to the rotary element.

Further, in the above-described first to sixth embodiments, although it has been described such that the annular protrusion and the annular concave portion are formed in the lower bearing holder in the stationary element, these may be formed in another element, for example, the outer peripheral electrode if it is the stationary element.

Further, in the above-described first to sixth embodiments, although it has been described such that each of the inner peripheral electrode, the outer peripheral electrode, and the roller current collector is plated, the present invention is not limited thereto and these may not be plated if they are formed of a highly conductive material.

Further, in the above-described first to sixth embodiments, although it has been described such that the bearing has the lip seals arranged on the upper and lower sides, the present invention is not limited thereto. For example, at least the upper lip seal may be provided and the lower lip seal may be omitted.

### {REFERENCE SIGNS LIST}

- 1: Rotary connector
- 2: Rotary element
- 3: Stationary element
- 4: Current collecting element
- 5: Passage
- 20: Inner peripheral electrode
- 23: Protrusion member
- 23a: Tubular portion (protrusion portion)
- 23b: Inner flange portion (protrusion, outer radial protrusion)
- 24: Pushing member
- 25: Annular protrusion
- 25a: Annular plate portion (protrusion, outer radial protrusion)
- 25b: Tubular portion (protrusion portion)
- 26: Annular recess (recess)
- 27: Annular protrusion (protrusion, outer radial protrusion)
- 28: Radial annular concave portion
- 29: Annular protrusion (protrusion, outer radial protrusion)
- 30: Outer peripheral electrode
- 30k: Inner flange portion (protrusion, inner radial protrusion)
- 31: Lower bearing holder
- 33: Bearing (shielded bearing)
- 37: Annular protrusion (protrusion, inner radial protrusion)
- 38: Annular recess (recess)
- 40: Roller current collector
- 50: Upper axial portion (bent portion)
- 51: Upper radial portion (bent portion)
- 52: Intermediate axial portion (bent portion)
- 53: Lower radial portion (bent portion)
- 54: Lower axial portion (bent portion)
- 120: Inner peripheral electrode
- 220: Inner peripheral electrode
- 220b: Large-diameter cylinder
- 220d: Small-diameter cylinder
- 320: Inner peripheral electrode
- 420: Inner peripheral electrode
- 426: Annular recess (recess)
- 520: Inner peripheral electrode
- 523: Protrusion member
- 523b: Outer flange portion (protrusion, outer radial protrusion)
- 528: Radial annular concave portion
- 537: Annular protrusion (protrusion, inner radial protrusion)

## Claims

1. A rotary connector, comprising:
an outer peripheral electrode;
an inner peripheral electrode which is inserted through the outer peripheral electrode and is disposed to be rotatable;
a plurality of roller current collectors which are arranged to make a planetary motion between the outer peripheral electrode and the inner peripheral electrode;
a bearing that axially supports the inner peripheral electrode to be rotatable; and
a bearing holder that holds the bearing,
wherein a bent portion is provided at a passage extending from a contact portion between the inner peripheral electrode and the roller current collector to the bearing.

2. The rotary connector according to claim 1,
wherein the rotary connector is placed vertically and the bent portion is provided at a vertically lower side of the roller current collector.

3. The rotary connector according to claim 2,
wherein the bearing is a shielded bearing in which a shield element is provided at least vertically upward.

4. The rotary connector according to claim 2,
wherein the bent portion is formed by a protrusion extending in a radial direction.

5. The rotary connector according to claim 4,
wherein the protrusion includes an inner radial protrusion and an outer radial protrusion, and
wherein the inner radial protrusion and the outer radial protrusion overlap each other in a vertical direction.

6. The rotary connector according to claim 4 or 5,
wherein the bent portion includes a recess which opens vertically upward.

7. The rotary connector according to claim 6,
wherein the recess has an annular shape.

8. The rotary connector according to claim 7,
wherein the recess is formed in the bearing holder.

9. The rotary connector according to claim 8, further comprising:
a protrusion portion which extends toward the recess.

10. The rotary connector according to claim 9,
wherein the protrusion portion partially enters the recess.
